# EUROPEAN PATENT APPLICATION

(11) **EP 4 635 994 A1**
(43) Date of publication of application: **22.10.2025**
(21) Application number: 25156487.8
(22) Date of filing: 07.02.2025
(51) Int. Cl.: C08F 210/16, F16L 9/12, C08L 23/0807

(54) **POLYETHYLENE RESIN COMPOSITION, METHOD OF PREPARING THE SAME, AND ARTICLE PRODUCED THEREFROM**

(30) Priority: 16.04.2024 KR 20240050605
(71) Applicant: Hanwha TotalEnergies Petrochemical Co., Ltd., Seosan-si, Chungcheongnam-do 31900 (KR)
(72) Inventor: PARK, Eun Jin, 31900 Chungcheongnam-do (KR); HAN, Jae Hyuck, 31900 Chungcheongnam-do (KR); PARK, Ji Yong, 31900 Chungcheongnam-do (KR); KIM, Young Gu, 31900 Chungcheongnam-do (KR)
(74) Representative: Nordic Patent Service A/S

(57) **Abstract**

Disclosed are a polyethylene resin composition containing 45 wt% to 55 wt% of an ethylene copolymer based on a total weight of the polyethylene resin composition, wherein the ethylene copolymer has a melt flow index M121.6 (21.6 kg load, 190°C) of 0.26 g/10 min to 0.50 g/10 min, a density of 0.919 g/cm³ to 0.924 g/cm³, and a weight average molecular weight (Mw) of 450,000 g/mol to 650,000 g/mol, a method of preparing the same, and an article produced therefrom.

## Description

### CROSS-REFERENCE TO THE RELATED APPLICATION

The present application claims priority to and the benefit of Korean Patent Application No. 10-2024-0050605, filed on April 16, 2024, in the Korean Intellectual Property Office, the entire disclosure of which is incorporated herein by reference.

### BACKGROUND

### 1. Field

The present disclosure relates to a polyethylene resin composition having excellent pressure resistance and slow crack growth resistance, a method of preparing producing the same, and an article produced therefrom.

### 2. Description of the Related Art

Pipes formed of polyethylene have been used as water pipes, gas pipes, industrial pipes and the like. Recently, in order to introduce non-conventional installation techniques (such as trenchless and sand bed-free technology) that can reduce installation costs and time of conventional installation techniques, excellent slow crack growth resistance is required for conventional polyethylene materials for pipes.

Strain hardening modulus (SHM), full notch creep test (FNCT), and notched pipe test (NPT) are typically used to evaluate slow crack growth resistance. Recently, four new slow crack growth resistance test items, namely, SHM, aFNCT (accelerated full notch creep test), aNPT (accelerated notched pipe test), and CRB (crack round bar) have been established in accordance with the EN 1555-1:2021 standard. aFNCT and aNPT are accelerated test methods of increasing the experimental temperature or replacing more reactive surfactants as a medium in the conventional method. A novel CRB test method is a fatigue test that includes applying a sinusoidal load to a cylindrical rod specimen and evaluating the number of failure cycles at the point of failure due to stress. The CRB test is known as a method of evaluating slow crack growth resistance within a relatively short period of time at an experimental temperature of room temperature (23°C).

In general, to increase slow crack growth resistance, polyethylene materials require a molecular structure having a high degree of entanglement between tie molecules. For this purpose, a comonomer having a high molecular weight or a large number of carbon atoms is used. However, the slow crack growth resistance of polyethylene materials is directly related to crystallinity, i.e., density. As the density increases, the pressure resistance of the pipe improves, but there is a problem that the slow crack growth resistance significantly decreases. As such, there is a trade-off between the pressure resistance of the pipe and slow crack growth resistance. Therefore, there is a need for development of a polyethylene resin composition that can satisfy both properties.

### [Prior art literature]

### [Patent literature]

Korean Patent Publication Laid-open No. 10-2020-0101872

### SUMMARY

Embodiments of the present disclosure provide a polyethylene resin composition with excellent pressure resistance and slow crack growth resistance.

Embodiments of the present disclosure provide a method of preparing the polyethylene resin composition.

Embodiments of the present disclosure provide an article produced from the polyethylene resin composition.

The objects to be solved by the present disclosure are not limited to the aspects mentioned above and other objects not mentioned herein will be clearly understood by those skilled in the art from the description below.

A polyethylene resin composition according to an embodiment of the present disclosure to accomplish the above object may contain 45 wt% to 55 wt% of an ethylene copolymer based on a total weight of the polyethylene resin composition, wherein the ethylene copolymer has a melt flow index MI21.6 (21.6 kg load, 190°C) of 0.26 g/10 min to 0.50 g/10 min, a density of 0.919 g/cm³ to 0.924 g/cm³, and a weight average molecular weight (Mw) of 450,000 g/mol to 650,000 g/mol.

The comonomer contained in the ethylene copolymer may include at least one of 1-butene, 1-pentene, 4-methyl-1-pentene, 1-hexene, 1-heptene, 1-octene, 1-decene, 1-undecene, 1-dodecene, 1-tetradecene, 1-hexadecene, or 1-eicosene.

The polyethylene resin composition may have a melt flow index MI5 (5 kg load, 190°C) of 0.16 g/10 min to 0.30 g/10 min.

The polyethylene resin composition may have a melt flow rate ratio (MFRR, MI21.6/MI5) of 30 to 40.

The polyethylene resin composition may have a density of 0.956 g/cm³ to 0.960 g/cm³.

The polyethylene resin composition may have a zero shear viscosity (η0) of 5,000,000 poise to 25,000,000 poise.

A method of preparing a polyethylene resin composition according to another embodiment of the present disclosure to accomplish the above object may include an ethylene copolymer in the presence of a catalyst using an ethylene monomer and a comonomer in a plurality of slurry polymerization reactors including a first reactor and a second reactor connected to each other, wherein the ethylene copolymer prepared in the first reactor has a melt flow index MI21.6 (21.6 kg load, 190°C) of 0.26 g/10 min to 0.50 g/10 min, a density of 0.919 g/cm³ to 0.924 g/cm³, and a weight average molecular weight (Mw) of 450,000 g/mol to 650,000 g/mol, and a polymerization ratio in the first reactor is 45 wt% to 55 wt%.

The catalyst may be a Ziegler-Natta catalyst.

An article according to another embodiment of the present disclosure to accomplish the above object may be produced from the polyethylene resin composition.

The article may have a crack round bar (CRB, 12.5 MPa) property of 1,500,000 cycles or more.

The article may have a strain hardening modulus of 70 MPa to 90 MPa.

The article may have a pipe hydrostatic pressure test (20°C, 12.0 MPa) property of 100 hr or more.

The article may have a Charpy impact strength (-30°C) of 10 kJ/m² to 15 kJ/m².

The article may be a pipe.

### DETAILED DESCRIPTION OF EXEMPLARY EMBODIMENTS

The advantages and features of the present disclosure and methods of accomplishing the same will be clearly understood from the following embodiments described in detail with reference to the attached drawings. However, the present disclosure is not limited to the embodiments and may be embodied in different forms. The embodiments are suggested only to offer a thorough and complete understanding of the disclosure and to sufficiently inform those skilled in the art of the technical concept of the present disclosure and the present disclosure is defined only by the scope of claims.

Prior to the description, the meanings of terms used herein will be briefly described. However, the explanation of terms is provided for better understanding of the present disclosure and the terms should not be construed as limiting the technical idea of the present disclosure unless the context clearly indicates that the terms are used to limit the scope of the present disclosure.

The terms used herein are provided only to illustrate the exemplary embodiments and should not be construed as limiting the scope of the disclosure. Singular forms are intended to include plural forms as well, unless the context clearly indicates otherwise. It will be further understood that the terms "comprises" and/or "comprising" used herein do not preclude the presence or addition of one or more other components in addition to the mentioned components. As used herein, the term "and/or" includes any one of the enumerated items and any combination of one or more thereof. It will be understood that, although the terms "first", "second", etc. may be used herein to describe various elements, these elements should not be construed as being limited by these terms, which are used only to distinguish one element from another. For example, within the scope defined by the present disclosure, a first element may be referred to as a second element.

Unless defined otherwise, all terms used herein (including technical or scientific terms) have the same meanings as generally understood by those skilled in the art to which the present disclosure pertains. In addition, terms identical to those defined in generally used dictionaries should be interpreted as having meanings identical to contextual meanings of the related art, and are not interpreted as having ideal or excessively formal meanings unless they are definitely defined in the present disclosure.

Hereinafter, embodiments of the present disclosure will be described in detail.

According to one embodiment, the present disclosure provides a polyethylene resin composition. The polyethylene resin composition may contain 45 wt% to 55 wt% of an ethylene copolymer based on the total weight of the polyethylene resin composition and the ethylene copolymer may have a melt flow index MI21.6 (21.6 kg load, 190°C) of 0.26 g/10 min to 0.50 g/10 min, a density of 0.919 g/cm³ to 0.924 g/cm³, and a weight average molecular weight (Mw) of 450,000 g/mol to 650,000 g/mol.

In one embodiment, the polyethylene resin composition may contain 45 wt% to 55 wt%, 47 wt% to 53 wt%, or 50 wt% to 53 wt% of the ethylene copolymer based on the total weight of the polyethylene resin composition. The polyethylene resin composition containing the ethylene copolymer within the above-mentioned range may have excellent pressure resistance and slow crack growth resistance.

In one embodiment, the ethylene copolymer may have a melt flow index MI21.6 (21.6 kg load, 190°C) of 0.26 g/10 min to 0.50 g/10 min, 0.30 g/10 min to 0.45 g/10 min, or 0.30 g/10 min to 0.35 g/10 min. The melt flow index MI21.6 of the ethylene copolymer is measured at 190°C with a 21.6 kg load using an orifice having an inner diameter of 2.75 mm. When an ethylene copolymer having a melt flow index MI21.6 within the above-mentioned range is contained, the pressure resistance and slow crack growth resistance may be excellent, and furthermore, appearance may be improved.

The density of the ethylene copolymer may be 0.919 g/cm³ to 0.924 g/cm³, 0.919 g/cm³ to 0.922 g/cm³, or 0.919 g/cm³ to 0.921 g/cm³. The ethylene copolymer may have the density within the above-mentioned range, thereby having excellent pressure resistance and slow crack growth resistance of the pipe.

The weight average molecular weight (Mw) of the ethylene copolymer may be 450,000 g/mol to 650,000 g/mol, 500,000 g/mol to 650,000 g/mol, or 550,000 g/mol to 600,000 g/mol. The weight average molecular weight of the ethylene copolymer is measured by gel permeation chromatography (GPC). When the ethylene copolymer contains an ethylene copolymer having a density within the above-mentioned range, slow crack growth resistance may be excellent.

The comonomer contained in the ethylene copolymer may include at least one of 1-butene, 1-pentene, 4-methyl-1-pentene, 1-hexene, 1-heptene, 1-octene, 1-decene, 1-undecene, 1-dodecene, 1-tetradecene, 1-hexadecene, or 1-eicosene. As a specific example, the comonomer may be 1-hexene.

In one embodiment, the polyethylene resin composition may have a melt flow index MI5 (5 kg load, 190°C) of 0.16 g/10 min to 0.30 g/10 min, 0.16 g/10 min to 0.26 g/10 min, or 0.20 g/10 min to 0.26 g/10 min. The melt flow index MI5 of the polyethylene resin composition is measured at 190°C with a 5 kg load using an orifice having an inner diameter of 2.095 mm. The polyethylene resin composition may have the melt flow index MI5 within the above-mentioned range, thereby preventing the pressure resistance of the pipe from being deteriorated due to a decrease in density, further improving the pressure resistance and slow crack growth resistance, and further preventing processability problems such as poor appearance during pipe formation.

In one embodiment, the MFRR (melt flow rate ratio, MI21.6/MI5) of the polyethylene resin composition is a ratio (MI21.6/MI5) of melt flow indexes each measured at 190°C with a load of 21.6 kg and 5 kg using an orifice having an inner diameter of 2.095 mm, and the MFRR of the polyethylene resin composition may be 30 to 40, 32 to 38, or 34 to 36. The polyethylene resin composition has the MFRR within the above-mentioned range, thereby preventing processability problems such as poor appearance during pipe formation due to the decrease in the melt flow index.

In one embodiment, the density of the polyethylene resin composition may be 0.950 g/cm³ to 0.966 g/cm³, 0.953 g/cm³ to 0.962 g/cm³, or 0.955 g/cm³ to 0.960 g/cm³. The polyethylene resin composition may have the density within the aforementioned range, thereby simultaneously exhibiting excellent pressure resistance and slow crack growth resistance of the pipe.

The zero shear viscosity (η0) of the polyethylene resin composition may be 5,000,000 poise to 25,000,000 poise, or 10,000,000 poise to 25,000,000 poise. The zero shear viscosity may be obtained by measuring the storage modulus and loss modulus as a function of the shear rate (unit: rad/sec). When the zero shear viscosity of the polyethylene resin composition falls within the above-mentioned range, the problem of sagging due to thickness imbalance when the polyethylene resin composition flows in the direction of gravity before the polyethylene resin composition is cooled during pipe extrusion may be solved.

In one embodiment, the present disclosure provides a method of preparing the polyethylene resin composition. The method of preparing the polyethylene resin composition includes preparing a polyethylene resin composition containing an ethylene copolymer in the presence of a catalyst using an ethylene monomer and a comonomer in a plurality of slurry polymerization reactors including a first reactor and a second reactor connected to each other, wherein the ethylene copolymer prepared in the first reactor has a melt flow index MI21.6 (21.6 kg load, 190°C) of 0.26 g/10 min to 0.50 g/10 min, a density of 0.919 g/cm³ to 0.924 g/cm³, and a weight average molecular weight (Mw) of 450,000 g/mol to 650,000 g/mol, and the polymerization ratio in the first reactor is 45 wt% to 55 wt%.

In one embodiment, the catalyst may be a Ziegler-Natta catalyst. The slurry polymerization reaction may be performed in the presence of a Ziegler-Natta catalyst. Specifically, the polyethylene resin composition may be prepared by performing slurry polymerization in a two-stage polymerization manner using the first reactor and the second reactor connected in series by feeding an ethylene monomer and a comonomer in the presence of a Ziegler-Natta catalyst.

The Ziegler-Natta catalyst is a known conventional Ziegler-Natta catalyst. A transition metal compound belonging to Group IV, Group V, or Group VI of the Periodic Table may be used as a main catalyst. Among them, the most commonly used Ziegler-Natta catalyst is a halogenated complex containing magnesium and titanium, or magnesium and vanadium.

In one embodiment, the comonomer contained in the ethylene copolymer may include at least one of 1-butene, 1-pentene, 4-methyl-1-pentene, 1-hexene, 1-heptene, 1-octene, 1-decene, 1-undecene, 1-dodecene, 1-tetradecene, 1-hexadecene, or 1-eicosene. As a specific example, the comonomer may be 1-hexene.

In one embodiment, the melt flow index MI21.6 (21.6 kg load, 190°C) of the ethylene comonomer prepared in the first reactor may be 0.26 g/10 min to 0.50 g/10 min, 0.30 g/10 min to 0.45 g/10 min, or 0.30 g/10 min to 0.35 g/10 min. When an ethylene copolymer having a melt flow index MI21.6 within the above-mentioned range is prepared in the first reactor, the pressure resistance and slow crack growth resistance of the polyethylene resin composition may be excellent and further, the appearance may be improved.

The density of the ethylene copolymer may be 0.919 g/cm³ to 0.924 g/cm³, 0.919 g/cm³ to 0.922 g/cm³, or 0.919 g/cm³ to 0.921 g/cm³. The ethylene copolymer has the density within the above-mentioned range, thereby exhibiting both excellent pressure resistance and excellent slow crack growth resistance of the pipe.

The weight average molecular weight (Mw) of the ethylene copolymer may be 450,000 g/mol to 650,000 g/mol, 500,000 g/mol to 650,000 g/mol, or 550,000 g/mol to 600,000 g/mol. The weight average molecular weight of the ethylene copolymer is measured by gel permeation chromatography (GPC). When the ethylene copolymer has the density within the above-mentioned range, the slow crack growth resistance may be excellent.

The polymerization ratio in the first reactor may be 45 wt% to 55 wt%, 47 wt% to 53 wt%, or 50 wt% to 53 wt%. A polyethylene resin composition containing the ethylene copolymer may be prepared in the first reactor with the polymerization ratio within the above-mentioned range and the polyethylene resin composition may exhibit excellent pressure resistance and slow crack growth resistance.

The ethylene copolymer may have a melt flow index MI21.6 (21.6 kg load, 190°C) of 0.26 g/10 min to 0.50 g/10 min, 0.30 g/10 min to 0.45 g/10 min, or 0.30 g/10 min to 0.35 g/10 min. The melt flow index MI21.6 of the ethylene copolymer is measured at 190°C with a 21.6 kg load using an orifice having an inner diameter of 2.75 mm. When the ethylene copolymer having a melt flow index MI21.6 within the above-mentioned range is contained, the pressure resistance and slow crack growth resistance may be excellent, and further, the appearance may be improved.

In one embodiment, the melt flow index M15 (5 kg load, 190°C) of the ethylene comonomer prepared in the second reactor may be 0.16 g/10 min to 0.30 g/10 min, 0.16 g/10 min to 0.26 g/10 min, or 0.20 g/10 min to 0.26 g/10 min. The melt flow index MI15 of the ethylene copolymer is measured at 190°C with a 5 kg load using an orifice having an inner diameter of 2.095 mm. An ethylene copolymer has the melt flow index M15 within the above-mentioned range, thereby preventing the pressure resistance of the pipe from being deteriorated due to a decrease in density, further improving the pressure resistance and slow crack growth resistance, and further preventing processability problems such as poor appearance during pipe formation.

In one embodiment, the MFRR (melt flow rate ratio) of the polyethylene resin composition refers to a ratio (MI21.6/MI5) of melt flow indexes measured at 190°C with a load of 21.6 kg and 5 kg using an orifice having an inner diameter of 2.095 mm, and the MFRR of the polyethylene resin composition may be 30 to 40, 32 to 38, or 34 to 36. The polyethylene resin composition may have the MFRR within the above-mentioned range, thereby preventing processability problems such as poor appearance during pipe formation due to the decrease in the melt flow index.

The density of the polyethylene resin composition may be 0.950 g/cm³ to 0.966 g/cm³, 0.953 g/cm³ to 0.962 g/cm³, or 0.955 g/cm³ to 0.960 g/cm³. The polyethylene resin composition has the density within the aforementioned range, thereby having excellent pressure resistance and slow crack growth resistance of the pipe.

The zero shear viscosity (η0) of the polyethylene resin composition may be 5,000,000 poise to 25,000,000 poise, or 10,000,000 poise to 25,000,000 poise. When the zero shear viscosity of the polyethylene resin composition falls within the aforementioned range, the problem of "sagging" due to thickness imbalance that occurs when the polyethylene resin composition flows in the direction of gravity before the polyethylene resin composition is cooled during pipe extrusion may be solved.

In one embodiment, in the step of preparing the polyethylene resin composition, an additive including at least one of an antioxidant or a neutralizing agent may be further added. The additive may be contained in an amount of 0.1 to 5 parts by weight based on 100 parts by weight of the polyethylene resin composition.

The type of the antioxidant is not particularly limited and the antioxidant may include at least one selected from the group consisting of, for example, 1,3,5-trimethyl-2,4,6-tris(3,5-di-tert-butyl-4-hydroxybenzyl)benzene, 1,6-bis[3-(3,5-di-tert-butyl-4-hydroxyphenyl)propionamido]hexane, 1,6-bis[3-(3,5-di-tert-butyl-4-hydroxyphenyl)propionamido]propane, tetrakis[methylene-(3,5-di-tert-butyl-4-hydroxyhydrocinnamate)]methane, and bis(2,4-di-tert-butylphenyl)pentaerythritol-di-phosphite.

The antioxidant may be contained in an amount of 0.1 to 5 parts by weight, or 0.2 to 0.4 parts by weight, based on 100 parts by weight of the polyethylene resin composition. When the antioxidant is contained in the amount within the above-mentioned range, corrosion and discoloration may be prevented due to oxidation of the pipe.

The type of the neutralizing agent is not particularly limited and may, for example, include at least one selected from the group consisting of calcium stearate, zinc stearate, magnesium aluminum hydroxy carbonate, zinc oxide, and magnesium hydroxy stearate.

The neutralizing agent may be contained in an amount of 0.01 to 0.3 parts by weight, or 0.1 to 0.2 parts by weight, based on 100 parts by weight of the polyethylene resin composition. When the neutralizing agent is contained in the amount within the above-mentioned range, resistance to pipe sagging, slow crack growth resistance, and odor may be improved.

According to one embodiment, the present disclosure provides an article produced from the polyethylene resin composition. The method of producing the article from the polyethylene resin composition is not particularly limited. For example, the method of producing the article from the polyethylene resin composition may include passing the polyethylene resin composition through an extruder. At this time, the extruder may be operated at a temperature of 230°C to 250°C, for example, 240°C to 250°C, and a speed of 1,050 rpm to 1,150 rpm, for example, 1,080 rpm to 1,140 rpm.

Owing to excellent pressure resistance and slow crack growth resistance, the polyethylene resin composition may be used for pipes, and more specifically, to produce pipes using non-conventional installation methods.

The article may be a pipe utilized in applications such as water pipes, gas pipes, and industrial pipes, and specifically, may be a pipe introduced through non-conventional installation that requires excellent slow crack growth resistance.

The article may have a CRB (crack round bar, 12.5 MPa) property measured in accordance with ISO 18489 of 1,500,000 cycles or more, 1,500,000 cycles to 3,500,000 cycles, 1,800,000 cycles to 3,000,000 cycles, or 1,900,000 cycles to 2,500,000 cycles. When the CRB property falls within the above-mentioned range, the slow crack growth resistance may be excellent and thus the pipe may be easily produced using an unconventional installation method.

The article may have a strain hardening modulus of 70 MPa to 90 MPa, 75 MPa to 90 MPa, or 75 MPa to 85 MPa as measured in accordance with ISO 18488. When the article has a strain hardening modulus within the above-mentioned range, a pipe having excellent long-term stability may be provided due to the improved slow crack growth resistance.

The article may have a pipe pressure resistance (measured by hydrostatic pressure test) (condition 20°C, 12.0 MPa) property of 100 hr or more, or 150 hr or more. The pipe pressure resistance is measured in accordance with ISO 1167. Specifically, a pipe having a dn of 32 mm (SDR11) is molded using the polyethylene resin composition and the fracture time is measured under the conditions of 20°C and a hoop stress of 12.0 MPa. When the fracture time is less than 100 hours, the pipe may not satisfy the minimum strength required for PE100 material and may not be applied to gas pipes, water pipes, and the like.

The article may have a Charpy impact strength (-30°C) measured in accordance with ISO 1872-2 of 10 kJ/m² to 15 kJ/m², or 12 kJ/m² to 15 kJ/m². When the article has a Charpy impact strength within the above-mentioned range, a pipe with excellent impact strength man be obtained.

Hereinafter, specific examples of the present disclosure will be described. However, the examples described below are only provided to exemplify or illustrate the present disclosure in detail and should not be construed as limiting the scope of the present disclosure. In addition, other details that may be sufficiently conceived by those skilled in the art will not be described.

### (Preparation of polyethylene resin composition)

### Example 1

Two-stage polymerization was performed through continuous slurry polymerization using a first reactor and a second reactor connected in series, a Ziegler-Natta catalyst was used as a catalyst, and 1-hexene was used as a comonomer.

The ethylene copolymer obtained in the first reactor had a melt flow index MI21.6 of 0.30 g/10 min, a density of 0.919 g/cm³, a weight average molecular weight of 565,000 g/mol, and a polymerization ratio in the first reactor of 52 wt%.

The reaction product obtained from the first reactor was supplied to the second reactor and participated in the reaction, and a polyethylene resin composition was prepared in the form of a pellet from the reaction product of the second reactor. The polyethylene resin composition had a melt flow index MI5 of 0.20 g/10 min, an MFRR of 36, and a density of 0.956 g/cm³.

### Example 2

Two-stage polymerization was performed through continuous slurry polymerization using a first reactor and a second reactor connected in series, a Ziegler-Natta catalyst was used as a catalyst, and 1-hexene was used as a comonomer.

The ethylene copolymer obtained in the first reactor had a melt flow index MI21.6 of 0.35 g/10 min, a density of 0.920 g/cm³, a weight average molecular weight of 560,000 g/mol, and a polymerization ratio in the first reactor of 51 wt%.

The reaction product obtained from the first reactor was supplied to the second reactor and participated in the reaction, and a polyethylene resin composition was prepared in the form of a pellet from the reaction product of the second reactor. The polyethylene resin composition had a melt flow index MI5 of 0.21 g/10 min, an MFRR of 36, and a density of 0.957 g/cm³.

### Comparative Example 1

A polyethylene resin composition was prepared in the same manner as Example 1 except, in accordance with the composition under the conditions shown in Table 1 below.

Compared to Example 1, the ethylene copolymer obtained by adjusting the polymerization ratio of the ethylene copolymer in the first reactor to 49 wt% had a melt flow index MI21.6 of 0.51 g/10 min, a density of 0.925 g/cm³, and a weight average molecular weight of 445,000 g/mol. The pellet-shaped polyethylene resin composition prepared therefrom had a melt flow index MI5 of 0.22 g/10 min, an MFRR of 41 and a density of 0.958 g/cm³.

### Comparative Example 2

A polyethylene resin composition was prepared in the same manner as Example 1 except, in accordance with the composition and the conditions shown in Table 1 below.

Compared to Example 1, the ethylene copolymer obtained by adjusting the polymerization ratio of the ethylene copolymer in the first reactor to 50 wt% had a melt flow index MI21.6 of 0.25 g/10 min, a density of 0.917 g/cm³, and a weight average molecular weight of 655,000 g/mol. The pellet-shaped polyethylene resin composition prepared therefrom had a melt flow index MI5 of 0.15 g/10 min, an MFRR of 29 and a density of 0.954 g/cm³.

### Comparative Example 3

A polyethylene resin composition was prepared in the same manner as Example 1 except, in accordance with the composition and the conditions shown in Table 1 below.

Compared to Example 1, the ethylene copolymer obtained by adjusting the polymerization ratio of the ethylene copolymer in the first reactor to 49 wt% had a melt flow index MI21.6 of 0.42 g/10 min, a density of 0.926 g/cm³, and a weight average molecular weight of 540,000 g/mol. The pellet-shaped polyethylene resin composition prepared therefrom had a melt flow index MI5 of 0.22 g/10 min, an MFRR of 34 and a density of 0.959 g/cm³.

### Comparative Example 4

A polyethylene resin composition was prepared in the same manner as Example 1 except, in accordance with the composition and the conditions shown in Table 1 below.

Compared to Example 1, the ethylene copolymer obtained by adjusting the polymerization ratio of the ethylene copolymer in the first reactor to 49 wt% had a melt flow index MI21.6 of 0.42 g/10 min, a density of 0.918 g/cm³, and a weight average molecular weight of 540,000 g/mol. The pellet-shaped polyethylene resin composition prepared therefrom had a melt flow index MI5 of 0.24 g/10 min, an MFRR of 34 and a density of 0.954 g/cm³.

### Comparative Example 5

A polyethylene resin composition was prepared in the same manner as Example 1 except, in accordance with the composition and the conditions shown in Table 1 below.

Compared to Example 1, the ethylene copolymer obtained by adjusting the polymerization ratio of the ethylene copolymer in the first reactor to 47 wt% had a melt flow index MI21.6 of 0.48 g/10 min, a density of 0.924 g/cm³, and a weight average molecular weight of 460,000 g/mol. The pellet-shaped polyethylene resin composition prepared therefrom had a melt flow index MI5 of 0.31 g/10 min, an MFRR of 42 and a density of 0.960 g/cm³.

### Comparative Example 6

A polyethylene resin composition was prepared in the same manner as Example 1 except, in accordance with the composition and the conditions shown in Table 1 below.

Compared to Example 1, the ethylene copolymer obtained by adjusting the polymerization ratio of the ethylene copolymer in the first reactor to 54 wt% had a melt flow index MI21.6 of 0.48 g/10 min, a density of 0.919 g/cm³, and a weight average molecular weight of 460,000 g/mol. The pellet-shaped polyethylene resin composition prepared therefrom had a melt flow index MI5 of 0.19 g/10 min, an MFRR of 33 and a density of 0.956 g/cm³.

**[Table 1]**

| | | Examp le 1 | Examp le 2 | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 |
|---|---|---|---|---|---|---|---|---|---|
| Fir st rea cto r | MI21.6 (g/10min) | 0.30 | 0.35 | 0.51 | 0.25 | 0.42 | 0.42 | 0.48 | 0.48 |
| | Polymeriz ation ratio (wt%) | 52 | 51 | 49 | 50 | 49 | 49 | 44 | 56 |
| | Density (g/cm³) | 0.919 | 0.92 | 0.925 | 0.917 | 0.926 | 0.918 | 0.924 | 0.919 |
| | Weight average molecular weight (g/mol) | 565, 0 00 | 560,0 00 | 445, 0 00 | 655, 0 00 | 540, 0 00 | 540, 0 00 | 460,0 00 | 460,0 00 |

### Test 1: Measurement of physical properties of polyethylene resin compositions

The following physical properties of the polyethylene resin compositions prepared in Examples 1 and 2 and Comparative Examples 1 to 6 were measured and the results are shown in Table 2 below.

### Melt flow index (MI)

The melt flow index MI21.6 was measured at 190°C under a load of 21.6 kg (orifice with inner diameter of 2.75 mm) in accordance with ASTM D1238.

The melt flow index MI5 was measured at 190°C under a load of 5 kg (orifice with inner diameter of 2.095 mm) in accordance with ASTM D1238.

### Melt flow rate ratio (MFRR)

The ratio of the melt flow index measured at 190°C under a load of 21.6 kg to the melt flow index measured under a load of 5 kg (orifice with inner diameter of 2.095 mm) was calculated in accordance with ASTM D1238.

### Density

Measured in accordance with ASTM D1505.

Weight average molecular weight (Mw)

Measured by gel permeation chromatography (GPC).

Zero shear viscosity (η0)

The storage modulus (G') and loss modulus (G'') were measured in accordance with the shear rate (unit: rad/sec) using ARES (advanced rheometer expansion system, 190°C) and the zero shear viscosity (η0) was calculated by applying the resulting values to the Carreau model.

### Test 2: Measurement of properties of pipe

The following properties of the pipes produced using the polyethylene resin compositions prepared in Example 1 and 2 and Comparative Examples 1 to 6, and the results are shown in Table 2 below.

### Fatigue test (Crack round bar test, CRB)

Fatigue test was measured in accordance with ISO 18489 in a target stress range from 11.5 MPa to 13.5 MPa, and the number of cycles when the stress was 12.5 MPa was extrapolated.

### Strain hardening modulus (SHM)

Measured in accordance with ISO 18488.

### Charpy impact strength

Measured at -30°C in accordance with ISO 179/1Ea using specimens satisfying the requirements of ISO 1872-2.

### Hydrostatic pressure test

Pipes having a dn of 32 mm and a size of SDR 11 were produced using the polyethylene resin composition and the fracture time was measured under the conditions of 20°C and a hoop stress of 12.0 MPa in accordance with ISO 1167.

### Appearance

Pipes having a dn of 32 mm (SDR11) or a dn of 110 mm (SDR11) were produced from the polyethylene resin composition using pipe extrusion equipment (uniEX 35-30C) from Battenfeld-Cincinnati GmbH. The outer and inner surfaces of the produced pipes were visually observed and the appearance level was evaluated in accordance with the following criteria.

### [Test criteria]

∘: When the surface is smooth and normal
×: When the surface is rough and has unevenness

**[Table 2]**

| | Examp le 1 | Exam ple 2 | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 |
|---|---|---|---|---|---|---|---|---|
| MI5 (g/10min) | 0.2 | 0.21 | 0.22 | 0.15 | 0.22 | 0.24 | 0.31 | 0.19 |
| MFRR | 36 | 36 | 41 | 29 | 34 | 34 | 42 | 33 |
| Density (g/cm³) | 0.956 | 0.95 7 | 0.958 | 0.954 | 0.959 | 0.954 | 0.960 | 0.956 |
| Zero shear viscosity (x 106 poise) | 13, 50 0,000 | 13,0 00,0 00 | 5,000 ,000 | 19,00 0,000 | 8,000 ,000 | 7,000 ,000 | 4,000 ,000 | 17,00 0,000 |
| CRB (Number of cycles x 10⁴) | 220 | 200 | 120 | 240 | 140 | 150 | 110 | 160 |
| SHM (MPa) | 85 | 80 | 76 | 77 | 68 | 76 | 69 | 77 |
| The result of hydrostati c pressure test (hr) | >100 | >100 | >100 | 60 | >100 | 80 | >100 | 70 |
| Impact strength (kJ/m²) | 13 | 14 | 11 | 15 | 12 | 13 | 10 | 15 |
| Appearance | ○ | ○ | ○ | X | ○ | ○ | ○ | ○ |

As can be seen from Table 2 above, Comparative Example 1 has a melt flow index MI21.6 of 0.51 g/10 min, a density of 0.925 g/cm³, and a weight average molecular weight of 445,000 g/mol, which are outside the range of the polyethylene resin composition for pipes according to one embodiment. In this case, the CRB is 120 x 10⁴ cycles, which means that the slow crack growth resistance is significantly reduced compared to Example 1.

Comparative Example 2 has a melt flow index MI21.6 of 0.25 g/10 min, a density of 0.917 g/cm³, and a weight average molecular weight of 655,000 g/mol, which are outside the range of the polyethylene resin composition for pipes according to one embodiment. In this case, the fraction time in the hydrostatic pressure test is 60 hr, which means that the pressure resistance of the pipe is significantly reduced and an appearance problem also occurs.

Comparative Example 3 has an ethylene copolymer density of 0.926 g/cm³, which is outside the range of the polyethylene resin composition for pipes according to one embodiment. In this case, the CRB is 140 x 10⁴ cycles, which means that slow crack growth resistance is significantly reduced compared to Examples 1 and 2.

Comparative Example 4 has an ethylene copolymer density of 0.918 g/cm³, which is outside the range of the polyethylene resin composition for pipes according to one embodiment. In this case, the fraction time in the hydrostatic pressure test is 80 hr, which means that the pressure resistance of the pipe is significantly reduced.

Comparative Example 5 has an ethylene copolymer polymerization ratio in the first reactor of 44 wt% and the melt flow index MI5 of the pellet-shaped polyethylene resin composition prepared therefrom is 0.31 g/10 min, which is outside the range of the polyethylene resin composition for pipes according to one embodiment. In this case, the CRB is 110 x 10⁴ cycles, which means that slow crack growth resistance is significantly reduced and the impact strength is lowered compared to Examples 1 and 2.

Comparative Example 6 has an ethylene copolymer polymerization ratio of 56 wt%, which is outside the range of the polyethylene resin composition for pipes according to one embodiment. In this case, the fraction time in the hydrostatic pressure test is 70 hr, which means that the pressure resistance of the pipe is significantly lowered.

As can be seen from Table 1 above, Examples 1 and 2 using the polyethylene resin composition according to one embodiment exhibit excellent slow crack growth resistance compared to Comparative Examples 1 to 6 and satisfy pressure resistance for pipes, thus satisfying the conventional PE100 requirements.

As apparent from the afore-going, the polyethylene resin composition according to the present disclosure may be useful in the production of pipes using unconventional installation methods due to excellent pressure resistance and slow crack growth resistance thereof.

The effects of the present disclosure are not limited to those described above, and other unmentioned technical effects will be apparent to those skilled in the art from the above description of exemplary embodiments.

Although the embodiments of the present disclosure have been disclosed with reference to the annexed drawings, those skilled in the art will appreciate that various modifications, additions and substitutions are possible, without departing from the scope and spirit of the disclosure. Thus, it is clear that the above-described exemplary embodiments are illustrative in all aspects and do not limit the present disclosure.

## Claims

1. A polyethylene resin composition comprising:
45 wt% to 55 wt% of an ethylene copolymer based on a total weight of the polyethylene resin composition,
wherein the ethylene copolymer has a melt flow index MI21.6 (21.6 kg load, 190°C) of 0.26 g/10 min to 0.50 g/10 min, a density of 0.919 g/cm³ to 0.924 g/cm³, and a weight average molecular weight (Mw) of 450,000 g/mol to 650,000 g/mol.

2. The polyethylene resin composition according to claim 1, wherein the comonomer contained in the ethylene copolymer comprises at least one of 1-butene, 1-pentene, 4-methyl-1-pentene, 1-hexene, 1-heptene, 1-octene, 1-decene, 1-undecene, 1-dodecene, 1-tetradecene, 1-hexadecene, or 1-eicosene.

3. The polyethylene resin composition according to claim 1, wherein the polyethylene resin composition has a melt flow index MI5 (5 kg load, 190°C) of 0.16 g/10 min to 0.30 g/10 min.

4. The polyethylene resin composition according to claim 1, wherein the polyethylene resin composition has a melt flow rate ratio (MFRR, MI21.6/MI5) of 30 to 40.

5. The polyethylene resin composition according to claim 1, wherein the polyethylene resin composition has a density of 0.956 g/cm³ to 0.960 g/cm³.

6. The polyethylene resin composition according to claim 1, wherein the polyethylene resin composition has a zero shear viscosity (η0) of 5,000,000 poise to 25,000,000 poise.

7. The polyethylene resin composition according to claim 1, wherein the polyethylene resin composition is used to produce a pipe.

8. A method of preparing a polyethylene resin composition comprising an ethylene copolymer in the presence of a catalyst using an ethylene monomer and a comonomer in a plurality of slurry polymerization reactors including a first reactor and a second reactor connected to each other,
wherein the ethylene copolymer prepared in the first reactor has a melt flow index MI21.6 (21.6 kg load, 190° C) of 0.26 g/10 min to 0.50 g/10 min, a density of 0.919 g/cm³ to 0.924 g/cm³, and a weight average molecular weight (Mw) of 450,000 g/mol to 650,000 g/mol, and
a polymerization ratio in the first reactor is 45 wt% to 55 wt%.

9. The method according to claim 7, wherein the catalyst is a Ziegler-Natta catalyst.

10. An article produced from the polyethylene resin composition according to any one of claims 1 to 7.

11. The article according to claim 10, wherein the article has a crack round bar (CRB, 12.5 MPa) property of 1,500,000 cycles or more.

12. The article according to claim 10, wherein the article has a strain hardening modulus of 70 MPa to 90 MPa.

13. The article according to claim 10, wherein the article has a pipe hydrostatic pressure test (20°C, 12.0 MPa) property of 100 hr or more.

14. The article according to claim 10, wherein the article has a Charpy impact strength (-30°C) of 10 kJ/m² to 15 kJ/m².

15. The article according to claim 10, wherein the article is a pipe.
